# EUROPÄISCHE PATENTSCHRIFT

(11) **EP 1 875 110 B1**
(45) Veröffentlichungstag und Bekanntmachung des Hinweises auf die Patenterteilung: **31.12.2008**
(21) Anmeldenummer: 06742681.7
(22) Anmeldetag: 25.04.2006
(51) Int. Cl.: F16J 15/08, F02F 11/00

(54) **FLACHDICHTUNG, INSBESONDERE ZYLINDERKOPFDICHTUNG**
FLAT GASKET, ESPECIALLY CYLINDER HEAD GASKET
JOINT PLAT, NOTAMMENT JOINT DE CULASSE

(30) Priorität: 28.04.2005 DE 102005019689
(43) Veröffentlichungstag der Anmeldung: 09.01.2008
(73) Patentinhaber: ElringKlinger AG, 72581 Dettingen (DE)
(72) Erfinder: SCHENK, Peter, 72531 Hohenstein (DE); WERZ, Ulrich, 72581 Dettingen (DE); GRUHLER, Tobias, 72793 Pfullingen (DE)
(74) Vertreter: Hoeger, Stellrecht & Partner Patentanwälte
(86) Internationale Anmeldenummer: PCT/EP2006/003805
(87) Internationale Veröffentlichungsnummer: WO 2006/114271

(56) Entgegenhaltungen:
- EP-A- 0 845 621
- US-A- 5 690 343
- US-A1- 2001 035 616
- US-A1- 2002 011 709
- US-A1- 2002 180 161

## Beschreibung

Die Erfindung betrifft eine Flachdichtung mit einer mehrere Durchgangsöffnungen aufweisenden Dichtungsplatte zur Abdichtung eines von Maschinenbauteil-Dichtflächen (z. B. von Dichtflächen eines Zylinderkopfs und eines Motorblocks) begrenzten Dichtspalts.

Derartige, als Zylinderkopfdichtungen ausgebildete Flachdichtungen ergeben sich aus der DE-103 24 667-A1 sowie der in diesem Dokument abgehandelten EP-0 485 693-B1. Ein weiterer wesentlicher Stand der Technik ist durch EP-0845621-A1 gegeben.

Im folgenden soll die Erfindung anhand einer Zylinderkopfdichtung erörtert werden, obwohl Gegenstand der Erfindung auch eine andere Flachdichtung sein kann, beispielsweise eine Auspuffkrümmerdichtung.

Die in der EP-0 485 693-B1 beschriebene Zylinderkopfdichtung besitzt eine einstückige metallische Dichtungsplatte, deren Formgebung folgende Überlegung zugrundeliegt: Für die Funktion einer Zylinderkopfdichtung können der Motorblock (Kurbelgehäuse) und der Zylinderkopf nicht als absolut steife Bauteile betrachtet werden; vielmehr führen das Anziehen der Zylinderkopfschrauben und die wechselnden Gasdrücke in den Brennräumen zu Durchbiegungen dieser Motorbauteile, d. h. letztlich dazu, daß der von den Motorbauteil-Dichtflächen begrenzte, die Zylinderkopfdichtung aufnehmende Dichtspalt nicht die Gestalt einer dünnen, planparallelen Platte behält. Auf die Topographie der im Motorbetrieb den Dichtspalt begrenzenden Motorbauteil-Dichtflächen haben aber auch noch einen Einfluß die im Motorbetrieb örtlich unterschiedlichen Wärmedehnungen (auch in axialer Richtung der Brennräume) von Motorblock und Zylinderkopf sowie die örtlich unterschiedliche Bauteilsteifigkeit dieser beiden Motorbauteile an deren Dichtflächen sowie in an diese Dichtflächen angrenzenden Bereichen (aufgrund von Ausnehmungen und Hohlräumen in den Motorbauteilen). Die Formgebung der Dichtungsplatte der Zylinderkopfdichtung nach der EP-0 485 693-B1 beruht nun auf dem Grundgedanken, die Form der Dichtungsplatte der Zylinderkopfdichtung in ihren für die Abdichtung wirksamen Bereichen an die Topographie der Motorbauteil-Dichtflächen anzupassen, wie sie nach dem Anziehen der Zylinderkopfschrauben, d. h. nach dem Einbau der Zylinderkopfdichtung, gegeben ist, und die für die Aufrechterhaltung der Abdichtung im Motorbetrieb erforderlichen elastischen Bauteilverformungen nicht an bzw. in der Zylinderkopfdichtung auftreten zu lassen, sondern vielmehr an bzw. in den Motorbauteilen Motorblock und Zylinderkopf, so daß sich die Dichtungsplatte der Zylinderkopfdichtung aus einem Werkstoff herstellen läßt, welcher beim Anziehen der Zylinderkopfschrauben und im Motorbetrieb standfest, d. h. nicht dickenverformbar ist.

Dieses Grundkonzept für die Gestaltung einer Zylinderkopfdichtung schließt natürlich nicht aus, daß die Dichtungsplatte mit einer Beschichtung versehen ist, welche z. B. der sogenannten Mikroabdichtung dient und sich an Oberflächenrauhigkeiten der Motorbauteil-Dichtflächen anpassen kann; eine solche Beschichtung kann eine Kunststoff- oder eine Beschichtung aus einem anderen Material, z. B. auch aus einem Metall, sein.

Es gibt nun Einsatzfälle von Zylinderkopfdichtungen, in denen eine Zylinderkopfdichtung der eingangs erwähnten Art mit einer als starr zu betrachtenden Dichtungsplatte nicht zu optimalen Ergebnissen führt: Bei einem Hubkolben-Verbrennungsmotor mit einem sogenannten Kettenkasten wird letzterer häufig von einem an den Motorblock angrenzenden Kettenkasten-Unterteil und einem an den Zylinderkopf angrenzenden Kettenkasten-Oberteil gebildet, wobei eines der beiden Teile auch an das benachbarte Bauteil Motorblock oder Zylinderkopf angeformt sein kann; der Dichtspalt wird dann vom Motorblock, dem Zylinderkopf und mindestens einem Kettenkastenteil begrenzt. Soll auch der Hohlraum des Kettenkastens ganz oder teilweise durch die Zylinderkopfdichtung abgedichtet werden, erstreckt sich diese auch über mindestens einen Bereich des als separates Bauteil gefertigten Kettenkastenteils. Fertigungstoleranzen haben aber nicht selten zur Folge, daß die der Zylinderkopfdichtung zugewandte Dichtfläche des als separates Bauteil gefertigten Kettenkastenteils nach dessen Montage mit der angrenzenden Dichtfläche des Motorblocks bzw. des Zylinderkopfs nicht exakt fluchtet, so daß an der Stoßstelle von Kettenkastenteil und Motorblock bzw. Zylinderkopf der durch die Zylinderkopfdichtung abzudichtende Dichtspalt eine stufenförmige Erweiterung oder Verschmälerung aufweist und mit einer eine starre Dichtungsplatte aufweisenden Zylinderkopfdichtung nur schwer abzudichten ist - führen Fertigungstoleranzen beispielsweise dazu, daß der Dichtspalt im Bereich des Kettenkastens enger ist als zwischen Motorblock und Zylinderkopf, kann eine Zylinderkopfdichtung mit einer starren Dichtungsplatte dazu führen, daß in dem zwischen Motorblock und Zylinderkopf liegenden Dichtspaltbereich die spezifischen Flächenpressungen zwischen der Zylinderkopfdichtung und dem Motorblock einerseits sowie dem Zylinderkopf andererseits zumindest bereichsweise für eine zuverlässige Abdichtung unter allen Betriebsbedingungen nicht ausreichen. Wenn eine Zylinderkopfdichtung der eingangs erwähnten Art mehrere, verhältnismäßig nahe beieinanderliegende Durchgangsöffnungen aufweist, welche gegeneinander und gegenüber der Umgebung durch mehrere, ungefähr streifen- oder linienförmige, aneinanderstoßende oder ineinander übergehende Erhebungen der Zylinderkopfdichtung abgedichtet werden sollen, kann das aus Zylinderkopfdichtung und Motorbauteil-Dichtflächen bestehende System unter Umständen in einem solchen Bereich statisch überbestimmt sein und zu einer mangelhaften Abdichtung führen. Außerdem kann es zu dauerhaften Verformungen der Motorblock-Dichtfläche in denjenigen Bereichen des Motorblocks kommen, in denen die Zylinderkopfschrauben angreifen, was insbesondere beim Austausch der Zylinderkopfdichtung bei Verwendung einer eine starre Dichtungsplatte aufweisenden Austauschdichtung gleichfalls zu Problemen führen kann.

Diese Probleme lassen sich mit der in der DE-103 24 667-A1 beschriebenen Zylinderkopfdichtung beseitigen oder zumindest abmildern, und zwar dadurch, daß bei einer Dichtung der eingangs erwähnten Art, wie sie sich aus der DE-103 24 667-A1 ergibt, der bzw. die Grundkörper auch Längsabschnitte aufweisen, die unter der beim Einbau der Dichtung sowie im Betrieb auftretenden Belastung plastisch, gegebenenfalls auch in geringem Maße elastisch, höhenverformbar sind, sei es, weil in einem solchen Längsabschnitt der Grundkörper anders dimensioniert und/oder im Querschnitt anders gestaltet ist als in den nicht höhenverformbaren Längsabschnitten, oder weil der Grundkörper in den höhenverformbaren Längsabschnitten andere Werkstoffeigenschaften besitzt als in den nicht höhenverformbaren Längsabschnitten. Dadurch kann sich die in der DE-103 24 667-A1 beschriebene Zylinderkopfdichtung in ausgewählten Bereichen an Veränderungen in der Topographie der Motorbauteil-Dichtflächen anpassen, welche sich beim Anziehen der Zylinderkopfschrauben, d. h. bei der Montage der Zylinderkopfdichtung, und/oder beim ersten Warmlaufen des Motors, gegebenenfalls aber auch noch in einer anfänglichen Betriebszeit des Motors ergeben können; ferner ist eine solche Zylinderkopfdichtung gegebenenfalls in der Lage, Fertigungstoleranzen auszugleichen und sich insbesondere beim Einbau einer Ersatzdichtung an im Motorbetrieb erfolgte dauerhafte Veränderungen der Motorbauteil-Dichtflächen anzupassen.

Aus der obigen Diskussion des Standes der Technik ergibt sich, daß die beschriebenen bekannten Zylinderkopfdichtungen ihre Abdichtfunktion nur dann zuverlässig erfüllen können, wenn die Motorbauteile, zwischen denen eine solche Zylinderkopfdichtung eingespannt ist, im Bereich der Erhebungen der Dichtungsplatte überall eine solche Bauteilelastizität aufweisen, daß trotz der örtlich unterschiedlichen Wärmedehnungen und der wechselnden Gasdrücke in den Brennräumen die Motorbauteil-Dichtflächen im Motorbetrieb stets mit der für die Abdichtung mindestens erforderlichen spezifischen Flächenpressung gegen die Zylinderkopfdichtung angepreßt werden, und zwar gegen die Kuppen der Erhebungen, wenn die Dichtungsplatte auf ihren beiden Seiten mit der Abdichtung dienenden Erhebungen versehen ist, oder gegen die Kuppen der Erhebungen sowie gegen den Erhebungen gegenüberliegende Flächenbereiche der Dichtungsplatte, wenn letztere nur auf einer ihrer Seiten mit solchen Erhebungen versehen ist.

Es hat sich nun aber gezeigt, daß es Einsatzgebiete für Flachdichtungen der in Rede stehenden Art gibt, bei denen die Maschinenbauteile nicht überall dort, wo dies für eine zuverlässige Abdichtung mit Hilfe einer solchen Flachdichtung notwendig ist, die erforderliche Bauteilelastizität aufweisen.

Der Erfindung lag deshalb die Aufgabe zugrunde, eine Flachdichtung der eingangs erwähnten Art, wie sie sich insbesondere aus der DE-103 24 667-A1 ergibt, zu schaffen, welche ihre Abdichtfunktion auch dann noch zuverlässig erfüllen kann, wenn die Maschinenbauteile, zwischen denen die Flachdichtung eingespannt werden soll, in denjenigen Bereichen oder in einem Teil dieser Bereiche, zwischen denen bei eingebauter Flachdichtung die Erhebung bzw. die Erhebungen der Dichtungsplatte liegen, nicht die für eine zuverlässige Funktion der Maschine erforderliche Bauteilelastizität aufweisen.

Gemäß dem Grundkonzept der erfindungsgemäßen Lösung dieser Aufgabe wird von dem Prinzip der bekannten, zumindest im wesentlichen druckfesten einlagigen Flachdichtungen mit tragenden Erhebungen, die auch im Maschinenbetrieb nicht höhenverformbar oder höchstens in gewissen Abschnitten geringfügig und im wesentlichen plastisch höhenverformbar sind, abgewichen und vorgeschlagen, die Dichtungsplatte der bekannten Flachdichtungen durch mindestens eine zweite Metallblechlage zu ergänzen, welche im Bereich einer Erhebung oder der Erhebungen der ersten Metallblechlage (in einer Draufsicht auf die Dichtungsplatte gesehen) mindestens eine in ihrer Höhe federelastisch verformbare Sicke aufweist, so daß die Erhebung und die Sicke zusammen einen dickenelastischen Bereich der Flachdichtung bilden.

Insbesondere bei einer Zylinderkopfdichtung können im Maschinenbetrieb, d. h. im Motorbetrieb, Schiebebewegungen zwischen der Flachdichtung und den Maschinenbauteil-Dichtflächen (insbesondere Motorblock und Zylinderkopf), zwischen denen die Flachdichtung eingespannt ist, auftreten, d. h. parallel zu der von der Flachdichtung definierten Ebene verlaufende Relativbewegungen, welche zu einem Verschleiß auch an der Flachdichtung führen können. Die Charakterisierung des Grundkörpers bzw. der Grundkörper der erfindungsgemäßen Flachdichtung als nicht höhenverformbar soll deshalb nicht ausschließen, daß im Maschinenbetrieb die Höhe bzw. Dicke eines Grundkörpers durch Reibverschleiß vermindert wird.

Auch wenn Ausführungsformen der erfindungsgemäßen Flachdichtung bevorzugt werden, bei denen der Grundkörper bzw. die Grundkörper unter der maximalen, beim Einbau der Flachdichtung sowie im Maschinenbetrieb auftretenden Belastung überall nicht höhenverformbar ist bzw. sind, kann ein Grundkörper einer erfindungsgemäßen Flachdichtung hinsichtlich seines Werkstoffs und seines Querschnitts derart beschaffen sein, daß er in denjenigen Bereichen, in denen bei eingebauter Flachdichtung und im Maschinenbetrieb die höchsten spezifischen Flächenpressungen auftreten, oder überall geringfügig, wenn auch in unterschiedlichem Maß, plastisch verformt wird. Unter einem Grundkörper oder einem Grundkörperabschnitt, der unter Einsatzbedingungen mindestens im wesentlichen druck- und kriechfest und damit nicht höhenverformbar ist, soll deshalb auch ein Grundkörper oder Grundkörperabschnitt verstanden werden, dessen Höhe (unter Umständen sogar überall) unter Einsatzbedingungen aufgrund einer plastischen Verformung geringfügig abnimmt, und zwar zum einen örtlich unterschiedlich und zum anderen um höchstens 50 µm, besser um höchstens 20 µm und vorteilhafterweise um ein deutlich geringeres Maß, nämlich um höchstens 10 µm.

In diesem Zusammenhang sei darauf hingewiesen, daß ein wesentliches Merkmal der Erfindung darin zu sehen ist, daß der Grundkörper bzw. die Grundkörper einer erfindungsgemäßen Flachdichtung unter den im Maschinenbetrieb auftretenden dynamischen Belastungen mindestens bereichsweise, vorzugsweise aber überall in seiner bzw. ihrer Höhe nicht elastisch verformbar ist bzw. sind. Dabei muß berücksichtigt werden, daß kein metallischer Gegenstand als absolut starr angesehen werden kann sondern stets auch ein unvermeidbares, wenn auch minimales elastisches, gegebenenfalls auch plastisches Verformungsverhalten zeigt; ein solches unvermeidliches Verformungsverhalten soll durch die Definition der vorliegenden Erfindung deshalb nicht ausgeschlossen werden.

Die zweite Metallblechlage kann sich über die ganze oder nur über einen Teil der Dichtungsplatte erstrecken - im letztgenannten Fall können auch mehrere zweite Metallblechlagen mit Sicken vorgesehen sein, welche nebeneinander (gegebenenfalls im Abstand voneinander) über bzw. unter der ersten Metallblechlage angeordnet sind. Wenn die Bauteilelastizität der Maschinenbauteile an manchen Stellen ausreichend und an anderen Stellen nicht ausreichend ist, genügt es natürlich auch, nur für diejenige Erhebung oder Erhebungen oder denjenigen Längsabschnitt oder diejenigen Längsabschnitte des Grundkörpers bzw. der Grundkörper, wo die Bauteilelastizität der Maschinenbauteile nicht ausreicht, eine solche Sicke bzw. solche Sicken vorzusehen.

Der von der vorliegenden Erfindung betroffene Typ von Flachdichtungen kann zwar eine Dichtungsplatte im herkömmlichen Sinne aufweisen, ebenso ist es aber möglich, mehrere Flachdichtungssegmente vorzusehen, an denen Erhebungen und Sicken vorgesehen sind, und die Dichtungssegmente über Verbindungsstege oder dergleichen miteinander zu verbinden, so daß ein skelettartiger Aufbau entsteht.

Wenn vorstehend davon die Rede war, daß die erfindungsgemäße Flachdichtung längliche Erhebungen mit einer zum Anpressen gegen mindestens eine Maschinenbauteil-Dichtfläche vorgesehenen Kuppe aufweist, folgt aus dieser Formulierung, daß nicht alle Bereiche der Dichtungsplatte, die bei eingebauter Flachdichtung gepreßt werden, die Gestalt solcher länglichen Erhebungen haben müssen.

Eine erfindungsgemäße Flachdichtung kann einen oder mehrere der erwähnten Grundkörper aufweisen, welche voneinander getrennt oder einstückig miteinander verbunden sein können.

Bei bevorzugten Ausführungsformen der erfindungsgemäßen Flachdichtung dienen die Erhebung bzw. Erhebungen der ersten Metallblechlage und die Sicke bzw. Sicken der zweiten Metallblechlage der Abdichtung um eine oder mehrere Durchgangsöffnungen der Dichtungsplatte herum; die Erhebung bzw. Erhebungen, gegebenenfalls samt Sicke bzw. Sicken, können aber zumindest bereichsweise auch die Funktion reiner Abstützelemente haben, durch die bei eingebauter Flachdichtung Verzüge eines der Maschinenbauteile oder beider Maschinenbauteile in gewissen Bereichen der letzteren verhindert oder zumindest minimiert werden, so wie dies beispielsweise bei einem Zylinderkopf für einen Mehrzylindermotor im Bereich der Längsenden des Zylinderkopfs wünschenswert sein kann.

Mit einer erfindungsgemäßen Flachdichtung läßt sich nicht nur die gestellte Aufgabe lösen, sondern auch noch ein weiterer Vorteil erzielen: Insbesondere im Falle von Zylinderkopfdichtungen, häufig aber auch im Falle anderer Flachdichtungen, wie beispielsweise Auspuffkrümmerdichtungen, gibt der Motorhersteller eine bestimmte Breite (Weite) des durch die Flachdichtung abzudichtenden Dichtspalts vor. Außerdem ist es oft wünschenswert, bei metallischen Flachdichtungen um eine abzudichtende Durchgangsöffnung herum ein dieses umschließendes ringförmiges Dichtelement dadurch zu schaffen, daß eine Metallblechlage um diese Durchgangsöffnung herum umgebördelt wird, d. h. daß ein an die Durchgangsöffnung angrenzender Randbereich der Metallblechlage auf sich selbst zurückgefaltet wird, um um die Durchgangsöffnung herum für eine erhöhte Pressung zwischen der Flachdichtung und den diese zwischen sich aufnehmenden Maschinenbauteil-Dichtflächen zu erzeugen. Eine vorgegebene Dichtspaltbreite von mehr als 1,5 mm bedingt nun aber bei einer einlagigen metallischen Flachdichtung, wie sie beispielsweise die EP-0 485 693-B1 oder die DE-103 24 667-A1 beschreibt, eine Blechstärke der Metallblechlage, die so groß ist, daß eine in dieser Metallblechlage durch Prägen erzeugte Sicke, beispielsweise ein Grundkörper in Form einer rechteckigen Sicke, wie er in der DE-103 24 667-A1 beschrieben und dargestellt ist, wegen der vorgegebenen Einbaudicke eine solche Höhe und infolgedessen aus umformtechnischen Gründen eine solche Breite haben muß, daß der in einer Flachdichtung z. B. zwischen zwei einander benachbarten Durchgangsöffnungen vorhandene Platz für die sich so ergebende Sickenbreite nicht ausreicht. Aufgrund der Tatsache, daß bei einer erfindungsgemäßen Flachdichtung die zweite Metallblechlage vorgesehen wird, läßt sich aber auch im Falle einer verhältnismäßig großen Dichtspaltbreite für die mit dem Grundkörper bzw. den Grundkörpern versehene erste Metallblechlage ein dünneres Blech verwenden als bei den bekannten Zylinderkopfdichtungen gemäß der EP-0 485 693-B1 und der DE-103 24 667-A1, mit der Folge, daß sich in beiden Metallblechlagen erfindungsgemäßer Flachdichtungen Sicken mit verhältnismäßig geringer Breite herstellen lassen, nämlich höhenelastische Sicken in der zweiten Metallblechlage und zumindest im wesentlichen nicht höhenverformbare Grundkörper bildende Rechtecksicken in der ersten Metallblechlage. Außerdem ermöglicht es die vergleichsweise geringe Blechstärke der ersten Metallblechlage einer erfindungsgemäßen Flachdichtung, diese erste Metallblechlage um eine abzudichtende Durchgangsöffnung herum zur Bildung eines Dichtelements auf sich selbst zurückzufalten, ohne daß sich dadurch in diesem Bereich eine im Hinblick auf die vorgeschriebene Dichtspaltbreite zu große Gesamtdicke der Flachdichtung ergibt.

Da bei einer erfindungsgemäßen Flachdichtung alle diejenigen Bereiche der ersten Metallblechlage, welche bei eingebauter Flachdichtung Pressungskräfte aufnehmen sollen, zumindest überwiegend nicht höhenverformbar sein sollen, während die Sicke bzw. Sicken der zweiten Metallblechlage in ihrer Höhe federelastisch verformbar sein sollen, empfehlen sich Ausführungsformen, bei denen die Blechdicke der ersten Metallblechlage größer als diejenige der zweiten Metallblechlage ist.

Für die zweite Metallblechlage ist ein Blech aus einem hochfesten Stahl mit elastischen Eigenschaften (im folgenden als Federstahlblech bezeichnet) zu bevorzugen, es ist aber auch möglich, für die zweite Metallblechlage ein anderes Stahlblech zu verwenden, welches nur im Sickenbereich z. B. aufgrund einer Wärmebehandlung mittels eines Lasers federelastische Eigenschaften aufweist.

Damit sich bei einer erfindungsgemäßen Flachdichtung der Grundkörper bzw. die Grundkörper durch Umformen der ersten Metallblechlage erzeugen lassen und der Grundkörper die erforderliche Standfestigkeit aufweist, zeichnen sich bevorzugte Ausführungsformen der erfindungsgemäßen Flachdichtung dadurch aus, daß die erste Metallblechlage aus einem gut umformbaren Stahl besteht, welcher im Bereich des Grundkörpers infolge eines Herausprägens des letzteren aus der Metallblechlage kaltverfestigt ist.

Bei der Sicke bzw. den Sicken der zweiten Metallblechlage kann es sich um eine sogenannte Vollsicke oder um eine sogenannte Halbsicke handeln, wobei die Vollsicke im Querschnitt ungefähr kreisbogenförmig und die Halbsicke ungefähr die Gestalt einer Stufe oder Abkröpfung mit einem schräg zur Lagenebene verlaufenden Bereich aufweist.

Damit sich die tragenden Bereiche der erfindungsgemäßen Flachdichtung, d. h. diejenigen Bereiche, welche bei eingebauter Flachdichtung gepreßt werden, möglichst gut an die den Dichtspalt begrenzenden Maschinenbauteil-Dichtflächen anpassen, ist es von Vorteil, wenn die Kuppe der Erhebung bzw. die Kuppen der Erhebungen längs der Erhebung bzw. der Erhebungen ein Höhenprofil aufweist bzw, aufweisen, das vor dem Einbau der Flachdichtung zumindest ungefähr entsprechend der Topographie des durch die Flachdichtung abzudichtenden Dichtspalts ausgebildet ist, welcher sich bei zwischen den Maschinenbauteil-Dichtflächen eingespannter Flachdichtung ergibt.

Vor allem dann, wenn es sich bei einer erfindungsgemäßen Flachdichtung um eine Zylinderkopfdichtung handelt, ist es empfehlenswert, die Dichtungsplatte wenigstens im Bereich der Kuppe der mindestens einen Erhebung mit einer Kunststoffbeschichtung zu versehen, bei der es sich z. B. um eine Beschichtung handelt, die dazu geeignet ist, Leckagen infolge einer Oberflächenrauhigkeit einer Maschinenbauteil-Dichtfläche oder der Maschinenbauteil-Dichtflächen zu vermeiden.

Weitere Merkmale, Einzelheiten und Vorteile der Erfindung ergeben sich aus der nachfolgenden Beschreibung sowie der beigefügten zeichnerischen Darstellung mehrerer besonders vorteilhafter Ausführungsformen der erfindungsgemäßen Flachdichtung; in der Zeichnung zeigen:
- Fig. 1: eine schematische Draufsicht auf eine als Zylinderkopfdichtung gestaltete erfindungsgemäße Flachdichtung;
- Fig. 2: einen Schnitt durch einen Teil dieser Zylinderkopfdichtung entsprechend der Linie 2-2;
- Fig. 3: eine der Fig. 2 entsprechende Darstellung einer zweiten Ausführungsform;
- Fig. 4: eine Variante der in Fig. 3 dargestellten Ausführungsform, wobei die beiden Metallblechlagen der Dichtungsplatte im Abstand voneinander gezeichnet wurden, um die Deutlichkeit der Darstellung zu erhöhen, und
- Fig. 5: eine weitere Ausführungsform, die lediglich den von der vorliegenden Erfindung betroffenen Bereich einer Flachdichtung im Schnitt zeigt.
- Figuren 6, 7: zwei nicht von der Erfindung erfasste Ausführungsformen.

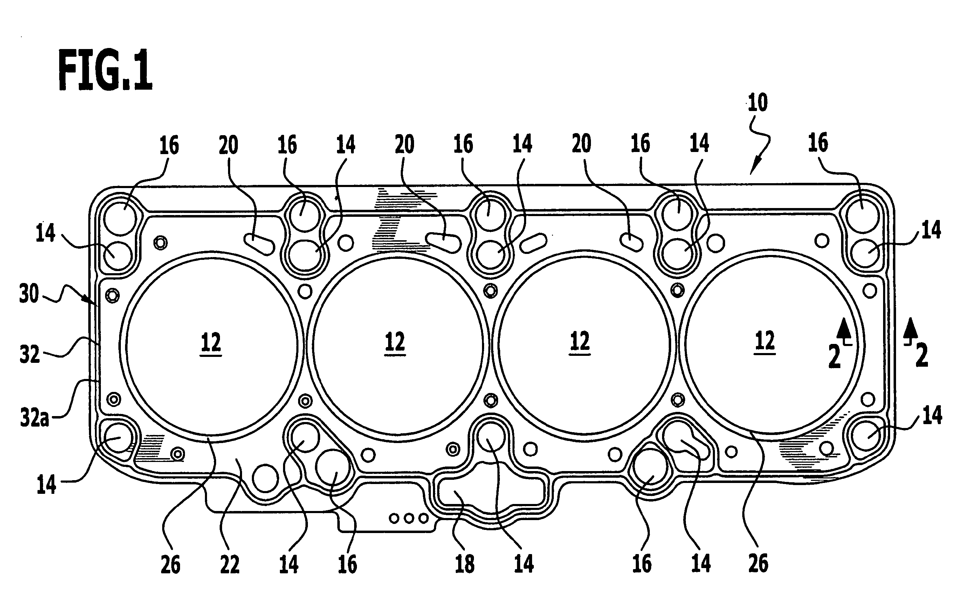

In der in Fig. 1 dargestellten Draufsicht auf eine erfindungsgemäße Zylinderkopfdichtung ist nur die obere der beiden Metallblechlagen der Dichtungsplatte dieser Zylinderkopfdichtung sichtbar, und bei dieser Metallblechlage handelt es sich um diejenige, welche mit den aus der Metallblechlage herausgeformten Grundkörpern versehen ist.

Diese Zylinderkopfdichtung hat eine als Ganzes mit 10 bezeichnete Dichtungsplatte, in welcher Brennraumöffnungen 12, Schraubenlöcher 14 für den Durchtritt von Zylinderkopfschrauben, Öllöcher 16 für den Durchgang von Drucköl, ein Ölloch 18 für den Ölrücklauf sowie diverse Wasserlöcher 20 für den Durchgang von Kühlmittel ausgebildet sind.

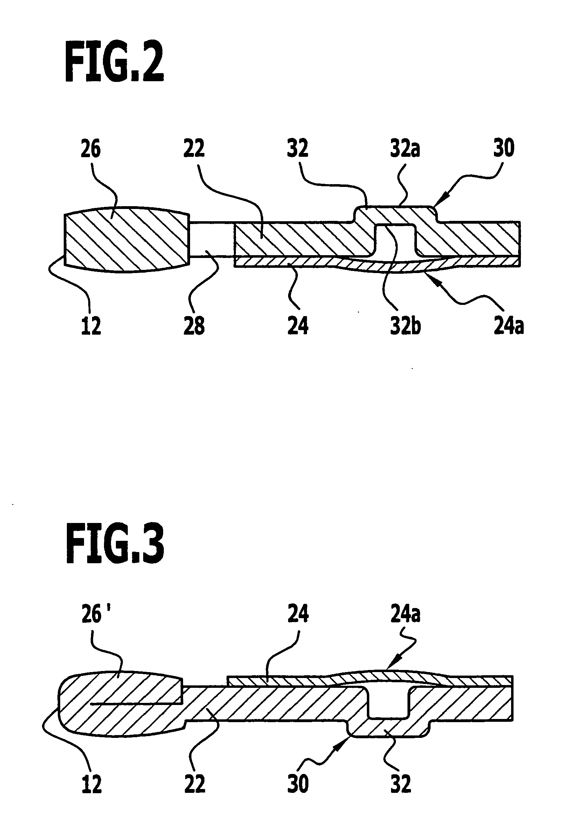

Wie sich aus den Figuren 1 und 2 ergibt, weist die Dichtungsplatte 10 eine erste Metallblechlage 22 verhältnismäßig großer Blechstärke und eine zweite Metallblechlage 24 geringerer Blechstärke auf, welche gegen die Unterseite der ersten Metallblechlage 22 anliegt. Die erste Metallblechlage 22 besteht aus einem durch Prägen umformbaren Stahlblech und erstreckt sich über die gesamte Dichtungsplatte 10. Mit der ersten Metallblechlage 22 sind massive kreisringförmige Brennraum-Dichtelemente 26 z. B. über in Fig. 1 nicht erkennbare Stege 28 verbunden, von denen jedes eine der Brennraumöffnungen 12 umschließt; diese Brennraum-Dichtelemente 26 bestehen aus einem druckfesten Stahl und sie sind in ihrer Dicke so bemessen, daß sich beim Einspannen der Zylinderkopfdichtung zwischen einem Zylinderkopf und einem Motorblock um die Brennraumöffnungen 12 herum die höchsten spezifischen Flächenpressungen (auf die Flächeneinheit bezogene Pressungskraft) im Bereich der Brennraum-Dichtelemente 26 ergeben.

Aus der ersten Metallblechlage 22 sind durch Prägen kufenartige, im Querschnitt ungefähr U-förmige Grundkörper 30 herausgeformt, welche über die eigentliche erste Metallblechlage 22 vorstehende längliche Erhebungen 32 bilden und flache Kuppen 32a aufweisen, die bei eingebauter Zylinderkopfdichtung gegen eine Dichtfläche des Zylinderkopfs oder des Motorblocks angepreßt sind. Den Kuppen 32a gegenüberliegend weisen die Grundkörper 30 Nuten 32b auf.

Beim Herausformen der Erhebungen 32 und dem damit einhergehenden Einprägen der Nuten 32b wird das Material der ersten Metallblechlage 22 kaltverfestigt, und die Grundkörper 30 sind in ihrem Querschnitt so bemessen, daß sich unter Berücksichtigung der Festigkeit des Materials der ersten Metallblechlage 22 im Bereich der Grundkörper 30 Erhebungen 32 ergeben, welche unter der maximalen, beim Einbau der Zylinderkopfdichtung sowie im Motorbetrieb auftretenden Druckbelastung mindestens über den größten Teil der Länge der Grundkörper 30 druck- und kriechfest und damit nicht höhenverformbar sind.

Die zweite Metallblechlage 24 besteht aus Federstahlblech und ist mindestens im Bereich eines oder mehrerer Grundkörper 30, vorzugsweise im Bereich aller Grundkörper 30, mit Sicken 24a versehen, bei denen es sich um sogenannte Vollsicken handelt, welche sich entlang der Grundkörper 30 erstrecken sowie deren Nuten 32b überbrücken, wobei sich die Sickenfüße (hierunter versteht man die beiden seitlichen Ränder einer Sicke, wo diese in die angrenzenden flachen Bereiche der Metallblechlage übergeht) zu beiden Seiten einer Nut 32b auf der ersten Metallblechlage 22 abstützen. Der Sickenkamm liegt also der Kuppe 32a der Erhebung 32 gegenüber.

Die zweite Metallblechlage 24 kann sich ebenso wie die erste Metallblechlage 22 über die ganze Dichtungsplatte 10 erstrecken und überall dort eine Sicke 24a aufweisen, wo die erste Metallblechlage 22 mit einem aus dieser herausgeformten Grundkörper 30 versehen ist. An die Stelle einer einzigen zweiten Metallblechlage 24 können aber auch mehrere auf der ersten Metallblechlage 22 nebeneinander und im Abstand voneinander angeordnete Segmente einer solchen zweiten Metallblechlage treten, die voneinander getrennt oder miteinander durch Stege verbunden sind. Außerdem sind Fälle denkbar, in denen nicht allen Grundkörpern 30 eine Sicke 24a oder ein Bereich einer zweiten Metallblechlage zugeordnet ist.

Für die Figuren 1 und 2 soll angenommen werden, daß bei eingebauter Zylinderkopfdichtung die Kuppen 32a der Erhebungen 32 gegen die Dichtfläche des Zylinderkopfs und die Sicken 24a gegen die Dichtfläche des Motorblocks anliegen.

Je nach den Werkstoffen des Zylinderkopfs und des Motorblocks kann es aber vorteilhaft sein, wenn die Sicken 24a gegen die Dichtfläche des Zylinderkopfs und die Kuppen 32a gegen die Dichtfläche des Motorblocks anliegen. Dies soll bei der in Fig. 3 dargestellten Variante der Fall sein. In Fig. 3 wurden dieselben Bezugszeichen wie in Fig. 2 verwendet mit Ausnahme des Bezugszeichens 26' für das Brennraum-Dichtelement der in Fig. 3 dargestellten Ausführungsform, bei der das Brennraum-Dichtelement 26' durch Umformen der ersten Metallblechlage 22 gewonnen wurde, und zwar dadurch, daß ein eine Brennraumöffnung 12 umschließender Randbereich der ersten Metallblechlage 22 auf sich selbst zurückgefaltet und dann durch Formpressen so gestaltet wurde, wie dies die Fig. 3 erkennen läßt.

Wie die Fig. 1 erkennen läßt, kann diese nun so interpretiert werden, als ob aus der ersten Metallblechlage 22 nur ein einziger Grundkörper 30 herausgeformt worden wäre, der einen einzigen, in sich geschlossenen, sich jedoch bereichsweise verzweigenden Linienzug bildet; gemäß einer anderen Interpretation ist die erste Metallblechlage 22 mit mehreren Grundkörpern 30 versehen, welche ineinander übergehen, d. h. mit ihren Kuppen 32a eine nicht unterbrochene ungefähr linienförmige Abdichtfläche bilden, die sich bereichsweise verzweigt. In jedem Fall werden alle Öllöcher 16, 18, teilweise gemeinsam mit Schraubenlöchern 14, von Grundkörpern oder Grundkörperabschnitten geschlossen umgeben, während die Wasserlöcher 20 bei eingebauter Zylinderkopfdichtung eingeschlossen sind zwischen Brennraum-Dichtelementen 26 und Grundkörpern 30 bzw. Grundkörperabschnitten (und natürlich auch zwischen den Dichtflächen des Motorblocks und des Zylinderkopfs).

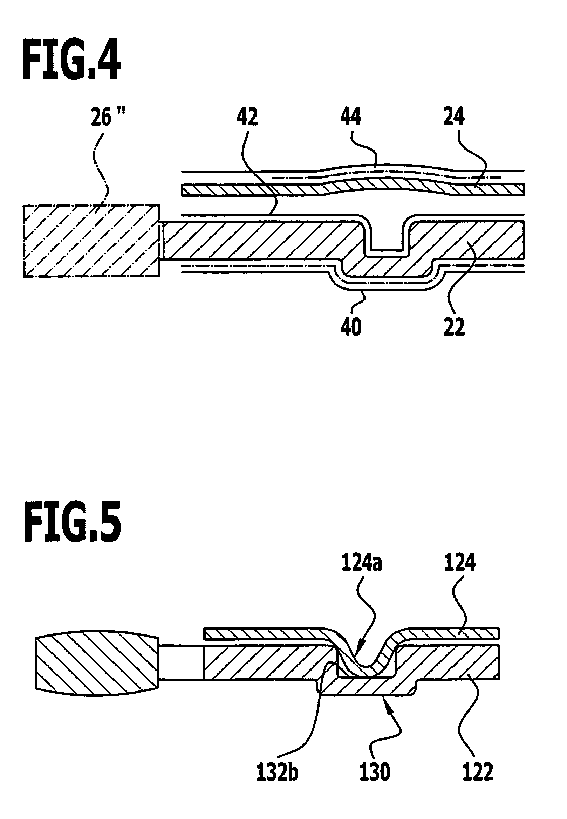

In Fig. 4 wurden dieselben Bezugszeichen verwendet wie in Fig. 3 mit Ausnahme des Bezugszeichens 26" für ein nur schematisch angedeutetes Brennraum-Dichtelement. In Fig. 4 wurde entgegen der Realität die zweite Metallblechlage 24 im Abstand von der ersten Metallblechlage 22 dargestellt, um folgendes Detail zeichnerisch deutlich wiedergeben zu können: Bei der in Fig. 4 dargestellten Ausführungsform weist die erste Metallblechlage 22 beidseitig eine Kunststoffbeschichtung 40 bzw. 42 auf, während die zweite Metallblechlage 24 nur auf ihrer einen Seite mit einer Beschichtung 44 versehen ist, und zwar auf derjenigen Seite, welche auf einer der Außenseiten der Dichtungsplatte 10 liegt. Bei diesen Beschichtungen kann es sich um ein- oder mehrlagige Beschichtungen handeln, für die Stoffe verwendet werden, wie sie für die Beschichtung von Metallblechlagen metallischer Zylinderkopfdichtungen allgemein verwendet werden und bekannt sind. Solche Beschichtungen können der sogenannten Mikroabdichtung dienen, um Oberflächenrauhigkeiten der Dichtflächen von Zylinderkopf und Motorblock auszufüllen. Bei mehrlagigen metallischen Flachdichtungen kann eine Beschichtung aber auch dazu dienen, im Inneren der Flachdichtung für eine bessere Abdichtung zwischen gegeneinander anliegenden Blechlagen zu sorgen. Schließlich kann eine solche Beschichtung auch dem Korrosionsschutz dienen oder eine Gleitschicht bilden, um im Maschinenbetrieb einen Reibverschleiß zwischen der Flachdichtung und den diese zwischen sich einschließenden Dichtflächen von Maschinenbauteilen zu vermeiden.

In den Figuren 5 bis 7 wurden dieselben Bezugszeichen wie in den Figuren 1 und 2 verwendet, jedoch unter Erhöhung um 100 bzw. 200 bzw. 300.

Bei der in Fig. 5 dargestellten Ausführungsform greift eine Vollsicke 124a der zweiten Metallblechlage 124 in die Nut 132b des Grundkörpers 130 ein, wobei die Abmessungsverhältnisse so gestaltet sind, daß bei eingebauter Zylinderkopfdichtung der Kamm der Sicke 124a gegen den Grund oder Boden der Nut 132b unter Vorspannung der Sicke 124a in vertikaler Richtung angepreßt wird, während die beiden Sickenfüße der Sicke 124a gegen die Dichtfläche des Motorblocks bzw. des Zylinderkopfs angepreßt werden.

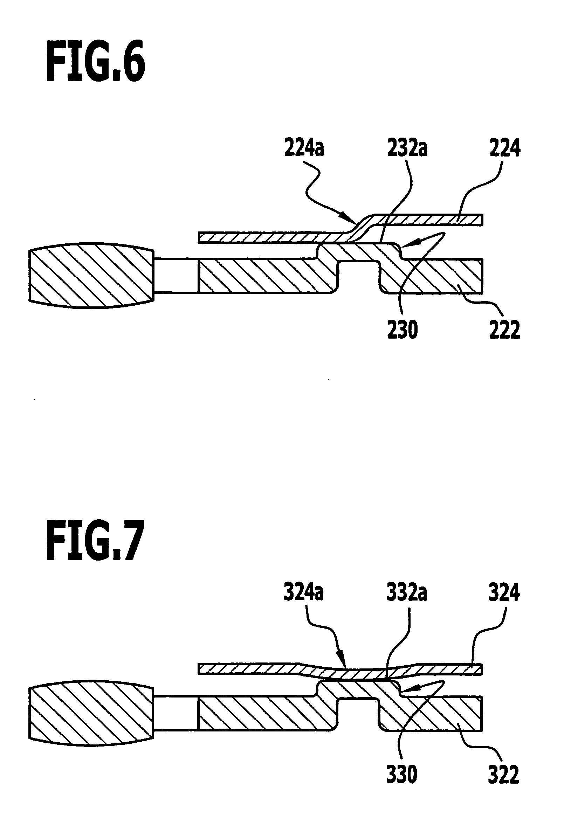

Bei der nicht von der Erfindung erfassten Ausführungsform gemäß Fig. 6 ist in der zweiten Metallblechlage 224 eine sogenannte Halbsicke 224a ausgebildet, die sich bei eingebauter Zylinderkopfdichtung auf der Kuppe 232a des Grundkörpers 230 abstützt.

Die in Fig. 7 dargestellte nicht von der Erfindung erfasste Ausführungsform unterscheidet sich von derjenigen gemäß Fig. 6 nur dadurch, daß an die Stelle der Halbsicke 224a eine Vollsicke 324a tritt, die sich mit ihrer Kuppe auf der Kuppe 332a des Grundkörpers 330 abstützt.

## Patentansprüche

1. Flachdichtung mit einer mehrere Durchgangsöffnungen (12) aufweisenden Dichtungsplatte (10) zur Abdichtung eines von Maschinenbauteil-Dichtflächen begrenzten Dichtspalts, wobei die Dichtungsplatte wenigstens eine erste Metallblechlage (22, 122) hat, welche zumindest einseitig wenigstens eine in der Draufsicht auf die Flachdichtung längliche Erhebung (32) mit einer bei zwischen den Maschinenbauteil-Dichtflächen eingespannter Flachdichtung mit einer Druckkraft beaufschlagten Kuppe (32a) aufweist, wobei ferner die Erhebung einen aus der ersten Metallblechlage herausgeformten länglichen Grundkörper (30, 130) aufweist, dessen Werkstoff derart beschaffen und dessen Querschnitt derart gestaltet ist, daß der Grundkörper unter der maximalen, beim Einbau der Flachdichtung sowie im Maschinenbetrieb auftretenden Belastung mindestens in ersten Längsabschnitten des Grundkörpers unelastisch und mindestens im wesentlichen druck- und kriechfest und damit nicht höhenverformbar ist, und wobei die Dichtungsplatte mindestens eine zweite Metallblechlage (24, 124) hat, welche im Bereich des Grundkörpers (30, 130) eine solche, bezüglich ihrer Höhe federelastisch verformbare Sicke (24a, 124a) aufweist, daß die Erhebung und die Sicke zusammen einen dickenelastischen Bereich der Flachdichtung bilden, **dadurch gekennzeichnet, daß** sich die Kuppe (32a) der Erhebung (32) der ersten Metallblechlage (22, 122) auf einer Außenseite der Dichtungsplatte (10) befindet.

2. Flachdichtung nach Anspruch 1, **dadurch gekennzeichnet, daß** die Blechdicke der ersten Metallblechlage (22, 122) größer als diejenige der zweiten Metallblechlage (24, 124) ist.

3. Flachdichtung nach Anspruch 1, **dadurch gekennzeichnet, daß** die zweite Metallblechlage (24, 124) eine Blechlage aus hochfestem Stahl mit elastischen Eigenschaften ist.

4. Flachdichtung nach Anspruch 1, **dadurch gekennzeichnet, daß** die erste Metallblechlage (22, 122) aus einem umformbaren Stahl besteht, welcher im Bereich des Grundkörpers infolge eines Herausprägens des Grundkörpers aus der ersten Metallblechlage kaltverfestigt ist.

5. Flachdichtung nach Anspruch 1, **dadurch gekennzeichnet, daß** sich die zweite Metallblechlage (24, 124) über die ganze Dichtungsplatte erstreckt.

6. Flachdichtung nach Anspruch 1, **dadurch gekennzeichnet, daß** die Sicke (24a, 124a) als Vollsicke ausgebildet ist.

7. Flachdichtung nach Anspruch 1, **dadurch gekennzeichnet, daß** die Kruppe (32a) längs der Erhebung (32) ein Höhenprofil aufweist, das vor dem Einbau der Flachdichtung zumindest ungefähr entsprechend der Topographie des durch die Flachdichtung abzudichtenden Dichtspalts ausgebildet ist, welcher sich bei zwischen den Maschinenbauteil-Dichtflächen eingespannter Flachdichtung ergibt.

8. Flachdichtung nach einem oder mehreren der vorstehenden Ansprüche, **dadurch gekennzeichnet, daß** die zweite Metallblechlage (24, 124) auf der der Kuppe der Erhebung gegenüberliegenden Seite der ersten Metallblechlage angeordnet ist.

9. Flachdichtung nach Anspruch 8, **dadurch gekennzeichnet, daß** die als Vollsicke gestaltete Sicke (24a, 124a) in von der ersten Metallblechlage (22, 122) weg weisender Richtung vorspringt und Sickenfüße hat, die in einer Draufsicht auf die Flachdichtung auf beiden Seiten des Grundkörpers außerhalb des Grundkörpers liegen.

10. Flachdichtung nach Anspruch 8, **dadurch gekennzeichnet, daß** die erste Metallblechlage (22, 122) auf ihrer der Kuppe der Erhebung gegenüberliegenden Seite im Bereich des Grundkörpers eine Nut (132b) aufweist, in die die als Vollsicke gestaltete Sicke (124a) derart eingreift, daß bei eingebauter und gepreßter Flachdichtung die konvexe Seite der Sicke gegen den Boden der Nut angepreßt ist und daß in einer Draufsicht auf die Flachdichtung Sickenfüße der Sicke auf beiden Seiten der Nut außerhalb der Nut liegen.

11. Flachdichtung nach einem der vorstehenden Ansprüche, **dadurch gekennzeichnet, daß** die Dichtungsplatte (10) an jeder Stelle höchstens zwei Metallblechlagen aufweist.

12. Flachdichtung nach einem der vorstehenden Ansprüche, **dadurch gekennzeichnet, daß** die Dichtungsplatte (10) wenigstens im Bereich der Kuppe der mindestens einen Erhebung mit einer Beschichtung (40, 42, 44) versehen ist.

13. Flachdichtung nach einem der vorstehenden Ansprüche, **dadurch gekennzeichnet, daß** die Flachdichtung als Zylinderkopfdichtung ausgebildet ist.

14. Flachdichtung nach einem der vorstehenden Ansprüche, **dadurch gekennzeichnet, daß** sich die Sicke (24a, 124a) entlang des Grundkörpers (30, 130) über dessen gesamte Länge erstreckt.

15. Flachdichtung nach Anspruch 16, **dadurch gekennzeichnet, daß** für jeden Grundkörper (30, 130) eine sich über dessen gesamte Länge erstreckende Sicke (24a, 124a) vorgesehen ist.

16. Flachdichtung nach einem der vorstehenden Ansprüche, **dadurch gekennzeichnet, daß** der Grundkörper (30, 130) eine Durchgangsöffnung oder mehrere Durchgangsöffnungen gemeinsam vollständig umschließt.

17. Flachdichtung nach einem oder mehreren der vorstehenden Ansprüche, **dadurch gekennzeichnet, daß** der Grundkörper (30, 130) und die ihm zugeordnete Sicke (24a, 124a) ein die Durchgangsöffnung als in bezüglich der Durchgangsöffnung radialer Richtung erstes Abdichtsystem umschließendes Abdichtsystem bilden.

18. Flachdichtung nach einem oder mehreren der vorstehenden Ansprüche, **dadurch gekennzeichnet, daß** die zweite Metallblechlage (24, 124) unter der maximalen, beim Einbau der Flachdichtung sowie im Maschinenbetrieb auftretenden Belastung nicht plastisch verformbar ist.

19. Flachdichtung nach einem oder mehreren der vorstehenden Ansprüche, **dadurch gekennzeichnet, daß** die Flachdichtung eine Zylinderkopfdichtung ist.

## Claims

1. Flat gasket comprising a gasket plate (10) incorporating a plurality of passage openings (12) for sealing a seal gap bounded by seal surfaces of machine components, the gasket plate having at least one first sheet metal layer (22, 122) which, on at least one side thereof, comprises at least one elevation (32) that is elongate in a plan view of the flat gasket and includes a crest (32a) that is subjected to a compressive force when the flat gasket is clamped between the seal surfaces of the machine components, the elevation having an elongate base body (30, 130) formed out from the first sheet metal layer, the material of the base body being constituted in such a manner and the cross section thereof being configured in such a manner that the base body is inelastic and at least substantially pressure- and creep-resistant and thus not deformable in height in at least first longitudinal sections of the base body under the maximum load occurring during the installation of the flat gasket as well as during operation of the machine, and the gasket plate having at least one second sheet metal layer (24, 124) which in the region of the base body (30, 130) comprises a bead (24a, 124a) which is deformable in springy-resilient manner with respect to the height thereof in such a way that the elevation and the bead together form a thickness-resilient region of the flat gasket, **characterized in that** the crest (32a) of the elevation (32) of the first sheet metal layer (22, 122) is located on an outer side of the gasket plate (10).

2. Flat gasket in accordance with claim 1, **characterized in that** the sheet thickness of the first sheet metal layer (22, 122) is greater than that of the second sheet metal layer (24, 124).

3. Flat gasket in accordance with claim 1, **characterized in that** the second sheet metal layer (24, 124) is a sheet metal layer consisting of a high-strength steel having resilient properties.

4. Flat gasket in accordance with claim 1, **characterized in that** the first sheet metal layer (22, 122) consists of a deformable steel which is work-hardened in the base body region due to the base body being embossed from the first sheet metal layer.

5. Flat gasket in accordance with claim 1, **characterized in that** the second sheet metal layer (24, 124) extends over the whole gasket plate.

6. Flat gasket in accordance with claim 1, **characterized in that** the bead (24a, 124a) is in the form of a full bead.

7. Flat gasket in accordance with claim 1, **characterized in that** the crest (32a) has a height profile along the elevation (32) which is formed, prior to the installation of the flat gasket, at least approximately in correspondence with the topography of the seal gap that is to be sealed by the flat gasket and results when the flat gasket is clamped between the seal surfaces of the machine components.

8. Flat gasket in accordance with one or more of the preceding claims, **characterized in that** the second sheet metal layer (24, 124) is arranged on the side of the first sheet metal layer opposite the crest of the elevation.

9. Flat gasket in accordance with claim 8, **characterized in that** the bead (24a, 124a) in the form of a full bead protrudes in a direction away from the first sheet metal layer (22, 122), and has bead feet which lie on both sides of the base body outside the base body in a plan view of the flat gasket.

10. Flat gasket in accordance with claim 8, **characterized in that** the first sheet metal layer (22, 122) on the side thereof opposite to the crest of the elevation comprises a groove (132b) in the region of the base body in which the bead (124a) in the form of a full bead engages in such a manner that the convex side of the bead is pressed against the bottom of the groove when the flat gasket is mounted and compressed, and **in that** bead feet of the bead lie on both sides of the groove outside the groove in a plan view of the flat gasket.

11. Flat gasket in accordance with any of the preceding claims, **characterized in that** the gasket plate (10) has at most two sheet metal layers at every point thereof.

12. Flat gasket in accordance with any of the preceding claims, **characterized in that** the gasket plate (10) is provided with a coating (40, 42, 44) at least in the region of the crest of the at least one elevation.

13. Flat gasket in accordance with any of the preceding claims, **characterized in that** the flat gasket is in the form of a cylinder head gasket.

14. Flat gasket in accordance with any of the preceding claims, **characterized in that** the bead (24a, 124a) extends along the base body (30, 130) over the entire length thereof.

15. Flat gasket in accordance with claim 16, **characterized in that** for each base body (30, 130) a bead (24a, 124a) is provided, which extends over the entire length thereof.

16. Flat gasket in accordance with any of the preceding claims, **characterized in that** the base body (30, 130) completely surrounds a passage opening or a plurality of passage openings together.

17. Flat gasket in accordance with one or more of the preceding claims, **characterized in that** the base body (30, 130) and the bead (24a, 124a) associated therewith form a sealing system surrounding the passage opening in the form of a first sealing system in a radial direction with respect to the passage opening.

18. Flat gasket in accordance with one or more of the preceding claims, **characterized in that** the second sheet metal layer (24, 124) is not deformable in plastic manner under the maximum load arising during the installation of the flat gasket and that occurring in operation of the machine.

19. Flat gasket in accordance with one or more of the preceding claims, **characterized in that** the flat gasket is a cylinder head gasket.

## Revendications

1. Joint plat avec une plaque d'étanchéité (10) présentant plusieurs ouvertures de passage (12) pour rendre étanche une fente d'étanchéité délimitée par des surfaces étanches de composants de moteur, la plaque d'étanchéité présentant au moins une première couche de tôle métallique (22, 122) qui présente au moins d'un côté au moins une surélévation (32) oblongue en vue de dessus du joint plat avec un sommet (32a) sollicité par une force de compression lorsque le joint plat est serré entre les surfaces étanches de composants de moteur, la surélévation présentant de plus un corps de base (30, 130) oblong, formé dans la première couche de tôle métallique, dont le matériau est fourni et sa section transversale conçue de sorte que le corps de base ne soit pas élastique en cas de charge maximale, survenant lors de l'installation du joint plat ainsi qu'en fonctionnement du moteur au moins dans des premières sections longitudinales du corps de base et soit résistant à la pression et au fluage au moins essentiellement et ainsi ne soit pas déformable en hauteur, et la plaque d'étanchéité ayant au moins une seconde couche de tôle métallique (24, 124) qui présente dans la zone du corps de base (30, 130) une telle moulure (24a, 124a) déformable en élasticité de ressort par rapport à sa hauteur que la surélévation et la moulure forment ensemble une zone à épaisseur élastique du joint plat, **caractérisé en ce que** le sommet (32a) de la surélévation (32) de la première couche de tôle métallique (22, 122) se trouve sur un côté extérieur de la plaque d'étanchéité (10).

2. Joint plat selon la revendication 1, **caractérisé en ce que** l'épaisseur de tôle de la première couche de tôle métallique (22, 122) est supérieure à celle de la seconde couche de tôle métallique (24, 124).

3. Joint plat selon la revendication 1, **caractérisé en ce que** la seconde couche de tôle métallique (24, 124) est une couche de tôle en acier à résistance élevée aux propriétés élastiques.

4. Joint plat selon la revendication 1, **caractérisé en ce que** la première couche de tôle métallique (22, 122) se compose d'un acier déformable qui est écroui dans la zone du corps de base à la suite d'un estampage du corps de base dans la première couche de tôle métallique.

5. Joint plat selon la revendication 1, **caractérisé en ce que** la seconde couche de tôle métallique (24, 124) s'étend sur l'ensemble de la plaque d'étanchéité.

6. Joint plat selon la revendication 1, **caractérisé en ce que** la moulure (24a, 124a) est réalisée comme une moulure pleine.

7. Joint plat selon la revendication 1, **caractérisé en ce que** le sommet (32a) présente le long de la surélévation (32) un profilé vertical qui est réalisé avant l'installation du joint plat au moins à peu près selon la topographie de la fente d'étanchéité que le joint plat doit rendre étanche, qui résulte lorsque le joint plat est serré entre les surfaces étanches de composants de moteur.

8. Joint plat selon l'une ou plusieurs quelconques des revendications précédentes, **caractérisé en ce que** la seconde couche de tôle métallique (24, 124) est disposée sur le côté opposé au sommet de la surélévation de la première couche de tôle métallique.

9. Joint plat selon la revendication 8, **caractérisé en ce que** la moulure (24a, 124a) conçue comme une moulure pleine fait saillie dans le sens s'éloignant de la première couche de tôle métallique (22, 122) et présente des pieds moulés qui se trouvent, en vue en élévation du joint plat, des deux côtés du corps de base en dehors de ce dernier.

10. Joint plat selon la revendication 8, **caractérisé en ce que** la première couche de tôle métallique (22, 122) présente sur son côté opposé au sommet de la surélévation dans la zone du corps de base une rainure (132b), dans laquelle la moulure (124a) conçue comme une moulure pleine s'engage de sorte que lorsque le joint plat est installé et pressé, le côté convexe de la moulure soit pressé contre le fond de la rainure et qu'en vue en élévation du joint plat, des pieds moulés se trouvent des deux côtés de la rainure en dehors de celle-ci.

11. Joint plat selon l'une quelconque des revendications précédentes, **caractérisé en ce que** la plaque d'étanchéité (10) présente à chaque endroit au maximum deux couches de tôle métallique.

12. Joint plat selon l'une quelconque des revendications précédentes, **caractérisé en ce que** la plaque d'étanchéité (10) est pourvue au moins dans la zone du sommet de l'au moins une surélévation, d'un revêtement (40, 42, 44).

13. Joint plat selon l'une quelconque des revendications précédentes, **caractérisé en ce que** le joint plat est réalisé comme un joint de culasse.

14. Joint plat selon l'une quelconque des revendications précédentes, **caractérisé en ce que** la moulure (24a, 124a) s'étend le long du corps de base (30, 130) sur toute sa longueur.

15. Joint plat selon la revendication 16, **caractérisé en ce qu'**une moulure (24a, 124a) s'étendant sur toute sa longueur est prévue pour chaque corps de base (30, 130).

16. Joint plat selon l'une quelconque des revendications précédentes, **caractérisé en ce que** le corps de base (30, 130) entoure complètement une ouverture de passage ou plusieurs ouvertures de passage ensemble.

17. Joint plat selon l'une ou plusieurs quelconques des revendications précédentes, **caractérisé en ce que** le corps de base (30, 130) et la moulure (24a, 124a) qui lui est associée forment un système d'étanchéité entourant l'ouverture de passage comme un premier système d'étanchéité dans le sens radial par rapport à l'ouverture de passage.

18. Joint plat selon l'une ou plusieurs quelconques des revendications précédentes, **caractérisé en ce que** la seconde couche de tôle métallique (24, 124) ne peut pas être déformée plastiquement en cas de charge maximale survenant lors de l'installation du joint plat ainsi qu'en fonctionnement du moteur.

19. Joint plat selon l'une ou plusieurs quelconques des revendications précédentes, **caractérisé en ce que** le joint plat est un joint de culasse.
